(19) Europäisches Patentamt
European Patent Office
Office européen des brevets

(11) **EP 2 574 963 A1**

(12) **EUROPEAN PATENT APPLICATION**

(43) Date of publication:
**03.04.2013 Bulletin 2013/14**

(51) Int Cl.:
***G01V 1/36*** *(2006.01)* ***G01V 1/28*** *(2006.01)*

(21) Application number: **12186431.8**

(22) Date of filing: **27.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2011 FR 1158686**

(71) Applicant: **CGGVeritas Services S.A.**
**91300 Massy (FR)**

(72) Inventor: **Roux, Pierre François**
**91300 Massy (FR)**

(74) Representative: **Regimbeau**
**20, rue de Chazelles**
**75847 Paris Cedex 17 (FR)**

(54) **Methods and systems for attenuating noise generated at fixed locations**

(57) Systems and methods according to these exemplary embodiments provide for attenuating noise (28) which interferes with recordings of a seismic source (20). A method includes:
generating a reference trace for a noise source (20) ; generating a primary trace (24) for the seismic source; generating a first estimated convolutional operator between the reference trace and the primary trace; convolving the operator with the reference trace for a time frame to generate an estimated noise for the time frame; and subtracting the estimated noise from the primary trace to generate an output signal.

Figure 1

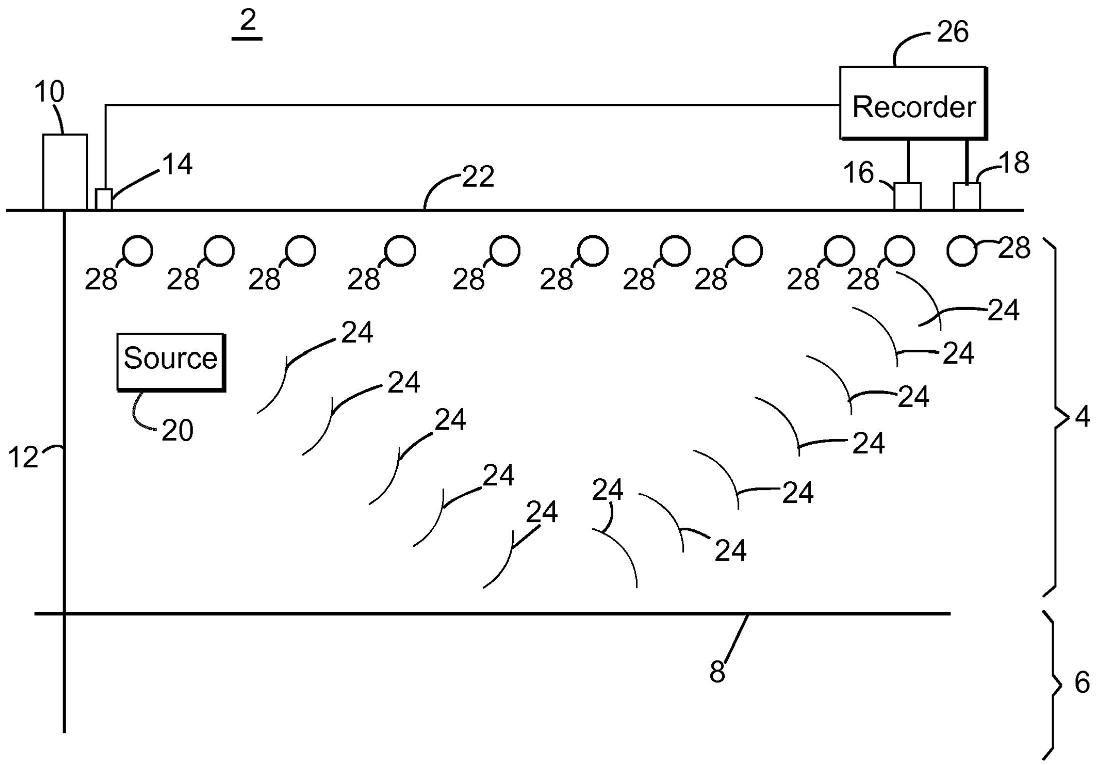


EP 2 574 963 A1

## Description

### TECHNICAL FIELD

The present invention relates generally to seismic measurements and, more particularly, to systems and methods for attenuating noise which can affect seismic measurements.

### BACKGROUND

In the oil and gas industry, seismic energy sources can be used to generate seismic signals which propagate into the earth. These seismic signals can reflect off of various interfaces between different underground formations which have different acoustic properties. The reflected seismic signals can then be recorded by sensors, e.g., geophone sensors, at or near the surface of the earth for use in determining potential locations of underground hydrocarbon reservoirs of, for example, natural gas and oil.

Once hydrocarbon reservoirs have been put into production, it is often desirable to be able to obtain ongoing seismic measurements to monitor characteristics of the underground hydrocarbon reservoir over time. For example, obtaining seismic data when (or before and after) injecting steam into the sand associated with the hydrocarbon reservoir may be desirable. On the other hand, several types of machinery, e.g., pumps and injectors, are often located on pads of fields which are recovering the hydrocarbon from the underground hydrocarbon reservoir. However, the machinery can generate a large amplitude of noise which can be problematic with ongoing seismic monitoring applications.

The noise generated by the machinery is generally known as "ground roll" which is typically a surface wave of usually relatively low velocity, relatively high amplitude and of relatively low frequency which is typically not reflected off of the interfaces between different underground formations which have different acoustic properties. This noise can increase the difficulty of obtaining the actual reflected seismic signals of interest.

One potential solution for solving this includes using one or more arrays of geophones of geophones which are spaced based upon the wavelength, which is typically inversely proportional to the frequency, of the ground roll. However, this requires prior knowledge of the ground roll (which may be difficult if even possible to obtain) and does not compensate for changes in the ground roll. Additionally, if there are multiple sources of noise from multiple pieces of machinery, the cost and complexity can increase due to the need for more arrays of geophones.

Accordingly, it would be desirable to have other methods and systems for alleviating the above described difficulties for ongoing seismic monitoring operations.

### SUMMARY

According to an exemplary embodiment, there is a method for attenuating noise which interferes with recordings of a seismic source, the method includes: generating a reference trace for a noise source; generating a primary trace for the seismic source; generating a first estimated convolutional operator between the reference trace and the primary trace; convolving the operator with the reference trace for a time frame to generate an estimated noise for the time frame; and subtracting the estimated noise from the primary trace to generate an output signal.

According to another exemplary embodiment, there is a device for attenuating noise which interferes with recordings of a seismic source, the device includes: a processor configured to generate a reference trace for a noise source; the processor configured to generate a primary trace for the seismic source; the processor configured to generate a first estimated convolutional operator between the reference trace and the primary trace; the processor configured to convolve the operator with the reference trace for a time frame to generate an estimated noise for the time frame; and the processor configured to subtract the estimated noise from the primary trace to generate an output signal.

### BRIEF DESCRIPTION OF THE DRAWINGS

The accompanying drawings illustrate exemplary embodiments, wherein:

Figure 1 depicts portions of an exploitable hydrocarbon field according to exemplary embodiments;

Figure 2 illustrates equipment used to capture and process received sound data according to exemplary embodiments;

Figure 3 shows a reference trace, a primary trace, an operator, a noise estimate and an output trace according to exemplary embodiments;

Figure 4 shows a flowchart of a method for removing noise from the primary trace according to exemplary embodiments;

Figure 5 shows a device according to exemplary embodiments; and

Figure 6 is a flowchart of a method for attenuating noise according to exemplary embodiments.

## DETAILED DESCRIPTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to exemplary embodiments, sound, e.g., seismic waves, can be used in support of hydrocarbon exploitation. However, when machinery in a fixed location is operating in some proximity to the field in which the hydrocarbons reservoirs are being monitored, noise from the machinery can interfere with reception of the seismic waves by geophones (or arrays of geophones). According to exemplary embodiments, the impact of the noise can be minimized or removed from the reception and/or recording of the desired seismic waves. Prior to discussing exemplary systems and methods, an environment where monitoring of seismic waves occurs, and in which noise reduction/cancellation techniques according to embodiments can be implemented, will be discussed.

According to exemplary embodiments portions of a purely illustrative exploitable hydrocarbon field 2 are shown in Figure 1. The exploitable hydrocarbon field 2 includes a non-hydrocarbon section 4, a hydrocarbon reservoir section 6 and an interface 8 between the two sections. On the surface 22 there can be one or more pieces of machinery 10, e.g., a pump or an injector, an associated hole 12 through which a fluid can be moved and multiple geophones (or arrays of geophones) 14, 16 and 18. A source 20 for generating seismic waves 24 can be located above or underneath the surface as desired. These seismic waves reflect off of the interface 8 and are then received by the geophones 16 and 18 which forward the received sound data to a recorder 16. When machinery 10 is operating, it can generate noise signals 28 (also known as ground rolls). These noise signals 28 typically propagate near the surface 22 and are received at the geophones 16 and 18 as well as being initially recorded by a geophone 14 located near the machinery. The noise signals 28 tend to be larger in amplitude than the seismic waves 24 and can cause problems with accurately recording the seismic waves 24.

According to exemplary embodiments, the geophone 14 can receive noise signals 28 from a machine 10, while geophones 16 and 18 receive both the noise signal(s) and seismic waves 24 from a source 20. As shown in Figure 2, the geophones 14, 16 and 18 are in communication with a recorder 26 which records the received information from the geophones 14, 16 and 18. The recorder 26 is in communication with a processing device 30 which takes the information from the recorder 26 to make a reference trace associated with the noise signal 28 and a primary trace associated with the data captured by the geophones 16 and 18. Convolution can be used by the processing device 30 to filter out the noise signal 28 from the primary trace to obtain an output signal which is more correctly associated with the seismic wave 24 after the seismic wave 24 has been reflected off of the interface 8. The output signal can then be displayed on a display 32 for use in determining changes to the hydrocarbon reservoir 6 and/or the associated sands. While shown as separate devices the recorder 26, processing device 30 and display 32 can alternatively be integrated as one or two units.

According to exemplary embodiments, noise generated at fixed locations can be attenuated from seismic recordings. This attenuation can be accomplished by either measuring the noise at its source, e.g., machinery 10, or by combining seismic recordings together to create a noise trace to attenuate the noise at any other location. This noise trace is also referred to herein as a reference trace. According to an exemplary embodiment, a (spectral) relationship between one or more reference traces, which can be created by recording or estimating only the noise, and a primary trace, which can be created from the recorded seismic wave plus other concurrently gathered noise, can be estimated. While exemplary embodiments described herein generally refer to a single primary trace for simplicity it is to be understood that there can be a plurality of primary traces. Moreover according to exemplary embodiments, if it is not possible to record directly a source of noise, either because it is unreachable or because it is moving, a reference trace can be generated by (1) locating the source of noise ; (2) selecting a set of traces that are nearby the said source of noise ; (3) performing a move-out corresponding to the said position and (4) stacking the subset of trace to obtain a signal-free, high noise amplitude reference trace.

According to exemplary embodiments, it is assumed that the reference trace(s) are based only upon recorded or estimated noise from one or more fixed locations. By doing this, the spectral relationship that exists between the reference trace(s) and the primary trace only concerns the noise that is to be suppressed. Estimating such an operator allows for an estimate of the noise on the primary trace. This estimate can be subtracted from the primary trace which results in an output trace with noise reduced or removed.

According to exemplary embodiments, for each frequency $\omega$ a relationship between the primary trace and the reference trace(s) can be described as shown in equation 1.

$$Gp \approx d \qquad (1)$$

where G is a matrix containing the reference trace(s) (with each column of the matrix describing a reference trace), d is a vector containing the primary trace and p is an operator which links the reference trace(s) to the primary trace. G and d both can have as many rows as there are identical time frames, with each time frame being regarded as a statistical realization of the phenomenon.

According to exemplary embodiments, it can be desirable to have at least as many time frames (also referred to herein as realizations) as there are reference traces in order to have an over determined linear system, i.e., there are more equations than unknowns. The obtained operators can be convolved with the reference traces at any other time to estimate the noise on the primary channel. Convolution uses two functions which undergo a mathematical operation to obtain a third function, i.e., the reference trace(s) and the primary trace undergo a mathematical operation to arrive at the third function which is based upon the primary trace with the noise component reduced or removed. Alternatively, cross correlation can be used in place of (de)convolution, e.g., computing a Wiener filter. Also, additional signal processing can be performed using cross-correlations, such as singular value decomposition (SVD), matrix filter and the like.

According to exemplary embodiments, d can be described as the sum of a desired signal s and the undesired noise n. As long as the assumption that the reference trace is representative of only (or substantially only) either the recorded or estimated noise from a device at a fixed location, the relationship between the reference trace and the primary trace only concerns the noise. This is equivalent to stating that the signal can be in the kernel of the linear application p. Additionally, this also implies that the noise propagates coherently between the reference trace(s) and the primary trace which is to have the noised removed.

According to exemplary embodiments, as described above, the noise that a piece of machinery 10 emits when in operation can be received locally by a geophone 14 which can be placed proximate the noise generating machinery 10. At a distance, one or more geophones (or an array of geophones) 16 and 18 can receive both the ground roll 28 (which includes the noise from the machine 10) and the seismic wave 24. Some or all of this information can be displayed on display 32, as well as the various intermediate processing functions and an output function, examples of which are shown in Figure 3. More specifically, Figure 3 shows a reference trace 34, a primary trace 36, an operator (p) 38, a noise estimate 39 and the output 52, based on simulated data. It will be appreciated by those skilled in the art, that an actual user interface which is implemented using the noise mitigation aspects of these embodiments may display only a subset of the functions depicted in Figure 3.

Therein, elements of the reference trace 34 can be seen in the primary trace 36, however these elements will be in a different temporal position with respect to the beginning of the trace due to the time it takes for the ground roll 28 to travel from the geophone 14 to geophone 16. For example noise element 40 is found in both the reference trace 34 and the primary trace 36. Additionally, the primary trace 36 can show elements which are different from the reference trace, such as element 42 which in this example represents the received seismic wave 24. Note that in Figure 3, the x-axis used for each of the traces is representative of the amplitude of the received sound. In this case, for example, the reference trace 34 has a noise amplitude that is approximately 50 times higher than the same event, i.e., noise element 40, on the primary trace 36. When traveling from the reference trace to the primary trace the noise element 40 is time-shifted and attenuated. The amount of time-shifting and attenuation can be modified based on various elements, such as, the amplitude of the noise element 40 and the element 42.

The operator trace 38 is derived using the reference trace 34 and primary trace 36 by first segmenting the continuous data into smaller windows. Then for each frequency we form a matrix G containing each window's corresponding Fourier coefficient as rows and each reference trace as columns, and a vector d containing each window's corresponding Fourier coefficient of the primary channel as rows. This forms an over determined linear system whose solution is the operator 38, provided there are at least as many time segments as there are assumed noise sources. This system can also be solved by means of cross-correlations by multiplying each member of the equation Gp = d by $G^T$, where the T denotes transpose conjugate, thus forming the references' spectral correlation matrix on the left side and the primary / reference spectral correlation matrix on the right side. The estimated noise trace 39 can then be computed by convolving the reference trace 34 with the operator trace 38. The estimated noise trace 39 can then be subtracted from the primary trace 36 to generate a noise mitigated output function 52.

According to exemplary embodiments, a method for removing the noise from the primary trace can include the following five steps as shown in Figure 4. At step 44, recording and/or estimating a number of reference traces equal to the number of potential noise sources. At step 46, estimating the convolutional operator between each reference trace and the primary trace. This can alternatively be performed using cross-correlation. At step 48, convolving each operator with its corresponding reference trace in the time frame for which the noise is to be removed. At step 50, subtracting the estimated noise from the initial recording to get a reduced or noise free output signal and optionally updating the operators when a modification in the noise source and/or a change in the propagation between the reference traces and the primary trace occurs. An example of the output signal 52 is shown in Figure 3. The output signal 52 does not show element 40 from the reference trace 34 but does show element 42 associated with the reflected seismic wave 24, i.e., indicating removal of the noise generated by machinery 10.

Exemplary embodiments described herein can allow for continuous monitoring of hydrocarbon fields that are being exploited, e.g., to observe changes when injecting steam into the hydrocarbon reservoir. According to an alternative exemplary embodiment, previously determined source noise parameters and ground conditions can be used in estimating the convolving operator. While in some cases, this estimate may not be optimal, it is expected that this estimate is preferable to not having an estimate at times when it may not be practical to obtain new or near real time information associated with the source noise parameters and the ground conditions.

The exemplary embodiments described above provide for attenuating noise which interferes with recordings of a seismic source. An exemplary device 30 which can perform the steps for attenuating noise which interferes with recordings of a seismic source,will now be described with respect to Figure 5. The device 30 can contain a processor 54 (or multiple processor cores), memory 56, one or more secondary storage devices 58 and an interface unit 60 to facilitate communications between the device 30 and other equipment, e.g., the recording device 26 and/or geophones 14, 16 and 18, used in capturing the information used in creating the traces. The processor 54 can execute instructions to perform the convolution operation and to remove the noise from the primary trace 36. Memory 56 can be used to store the reference trace 34, the primary trace 36 and the output signal 52. Additionally, a display 32 can display the various traces, the output signal 52 and other information as desired. Thus, device 30 can perform the exemplary embodiments described herein.

According to exemplary embodiments, a method for attenuating noise which interferes with recordings of a seismic source includes the steps illustrated in Figure 6. Therein, at step 62, generating a reference trace for a noise source; at step 64, generating a primary trace for the seismic source; at step 66, generating a first estimated convolutional operator between the reference trace and the primary trace; at step 68, convolving the operator with the reference trace for a time frame to generate an estimated noise for the time frame; and, at step 70, subtracting the estimated noise from the primary trace to generate an output signal. For example, the step of generating a reference trace can involve the determination of a function associated with the noise, e.g., by recording only the noise and/or estimating the noise. Similarly, the step of generating a primary trace can involve the determination of a function associated with both the noise and the desired signal, e.g., the reflected signal energy from the hydrocarbon deposit, by recording the received composite signal.

The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope and spirit of the present invention as defined by the following claims. No element, act, or instruction used in the description of the present application should be construed as critical or essential to the invention unless explicitly described as such. Also, as used herein, the article "a" is intended to include one or more items.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

**1.** A system for recording noise-mitigated seismic data associated with a hydrocarbon deposit comprising:

a signal source configured to generate a signal to be reflected from said hydrocarbon deposit;
a first geophone disposed proximate a noise generating source and configured to receive a noise signal;
at least one second geophone configured to receive the signal reflected from the hydrocarbon deposit and the noise signal; and
a processing and recording device connected to the first geophone and the at least one second geophone and configured to:

generate a reference trace associated with the noise signal;
generate a primary trace associated with the noise signal and the reflected signal;
generate a convolutional operator between the reference trace and the primary trace;
convolve the convolutional operator with the reference trace to generate an estimated noise; and

subtract the estimated noise from the primary trace to generate the noise-mitigated seismic data.

**2.** A method for attenuating noise which interferes with recordings of a seismic source, the method comprising:

generating a reference trace for a noise source;
generating a primary trace for the seismic source;
generating a first estimated convolutional operator between the reference trace and the primary trace;
convolving the operator with the reference trace for a time frame to generate an estimated noise for the time frame; and
subtracting the estimated noise from the primary trace to generate an output signal.

**3.** The method of claim 2, further comprising:

generating the reference trace by measuring noise from the noise source, wherein the noise source is from a fixed location.

**4.** The method of claim 2, further comprising:

generating the reference trace by combining two or more seismic readings associated with the noise source, wherein the noise source is from a fixed location.

**5.** The method of claim 2, further comprising:

generating a second estimated convolutional operator when at least one of a modification to the noise source occurs or a change in propagation properties between the reference trace and the primary trace occurs.

**6.** The method of claim 2, wherein the reference between the convolutional operator, the primary trace and the reference trace is described by $Gp \approx d$, wherein G is a matrix which describes one or more reference traces, p is a convolutional operator and d is a vector describing the primary trace.

**7.** The method of claim 2, further comprising:

generating a plurality of reference traces wherein each reference trace is associated with a different noise source.

**8.** The method of claim 2, further comprising
using the output signal to monitor change associated with an underground hydrocarbon reservoir.

**9.** The method of claim 2, further comprising:

receiving a ground roll signal from a noise source; and
receiving a reflected signal which has been reflected off of an underground hydrocarbon reservoir.

**10.** The method of claim 9, wherein the ground roll signal is used to generate the reference trace and the reflected signal is used to generate the primary trace.

**11.** The method of claim 2, further comprising:

storing the output signal; and
displaying the output signal.

**12.** A device for attenuating noise which interferes with recordings of a seismic source, the device comprising:

a processor configured to generate a reference trace for a noise source, to generate a primary trace for the seismic source; to generate a first estimated convolutional operator between the reference trace and the primary trace; to convolve the operator with the reference trace for a time frame to generate an estimated noise for the time frame; and to subtract the estimated noise from the primary trace to generate an output signal.

**13.** The device of claim 12, wherein the processor is configured to generate the reference trace by measuring noise from the noise source, wherein the noise source is from a fixed location.

14. The device of claim 12, wherein the processor is configured to generate the reference trace by combining two or more seismic readings associated with the noise source, wherein the noise source is from a fixed location.

15. The device of claim 12, wherein the processor is configured to generate a second estimated convolutional operator when at least one of a modification to the noise source occurs or a change in propagation properties between the reference trace and the primary trace occurs.

Figure 1

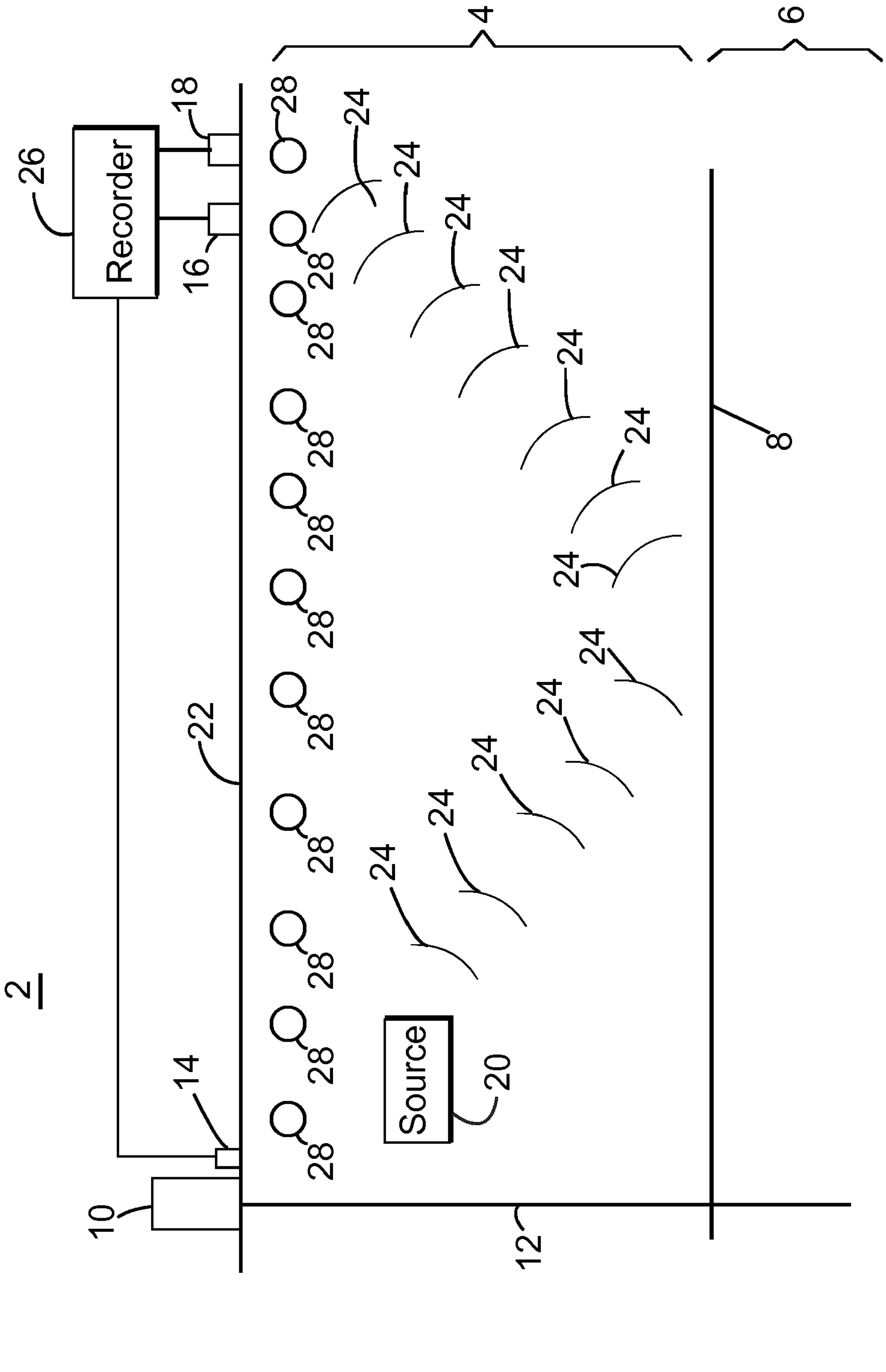

Figure 2

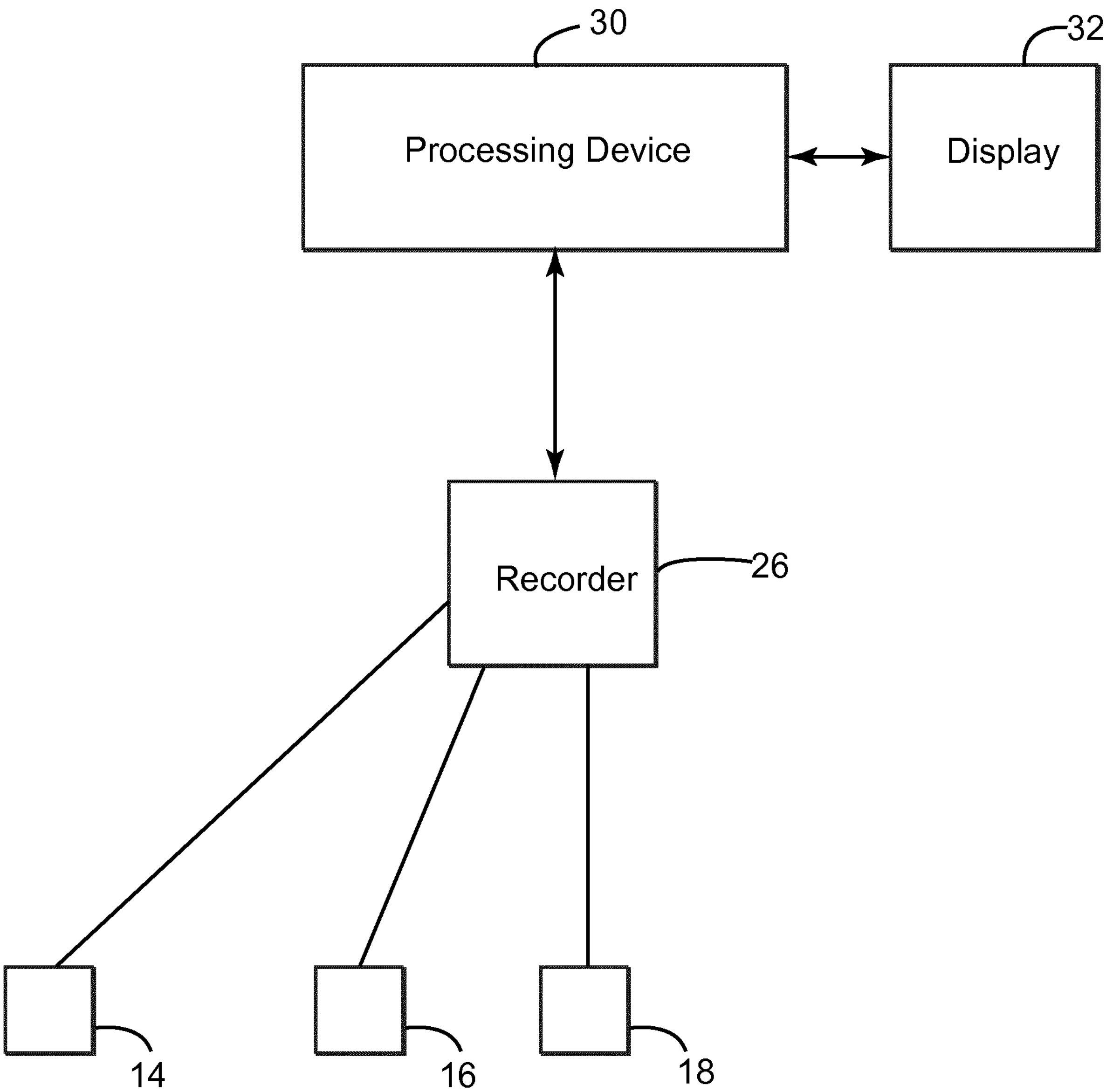

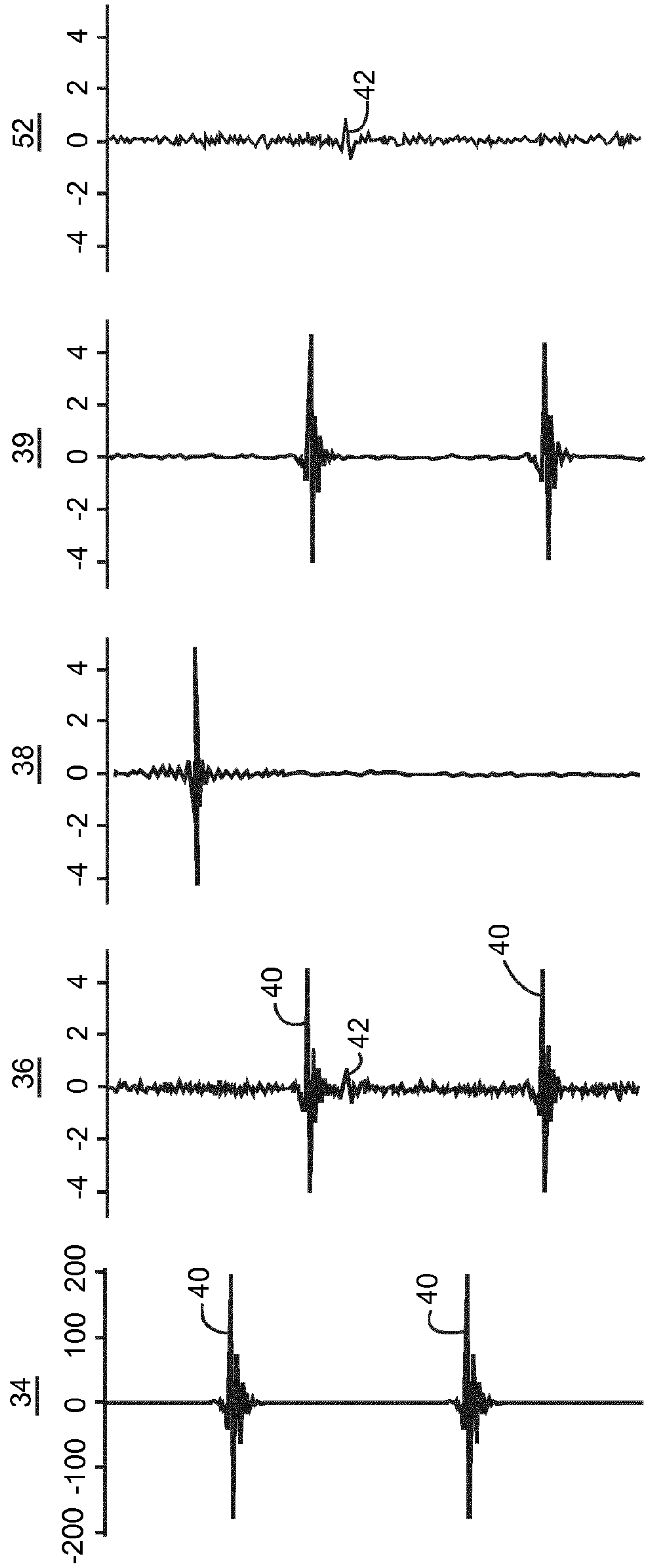
52
42
-4 -2 0 2 4
39
-4 -2 0 2 4
38
-4 -2 0 2 4
36
40
42
40
-4 -2 0 2 4
34
40
40
-200 -100 0 100 200

Figure 3

Figure 4

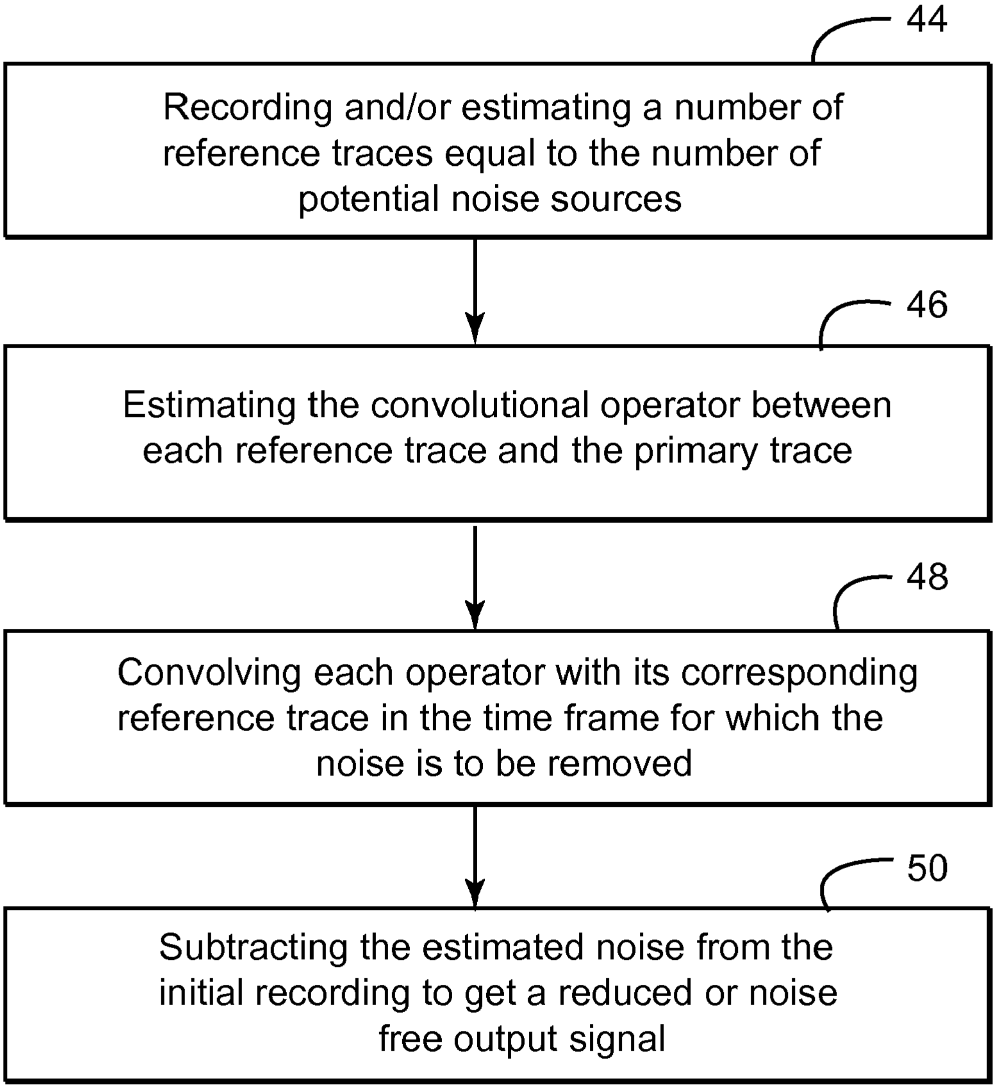
44
Recording and/or estimating a number of reference traces equal to the number of potential noise sources
46
Estimating the convolutional operator between each reference trace and the primary trace
48
Convolving each operator with its corresponding reference trace in the time frame for which the noise is to be removed
50
Subtracting the estimated noise from the initial recording to get a reduced or noise free output signal

Figure 5

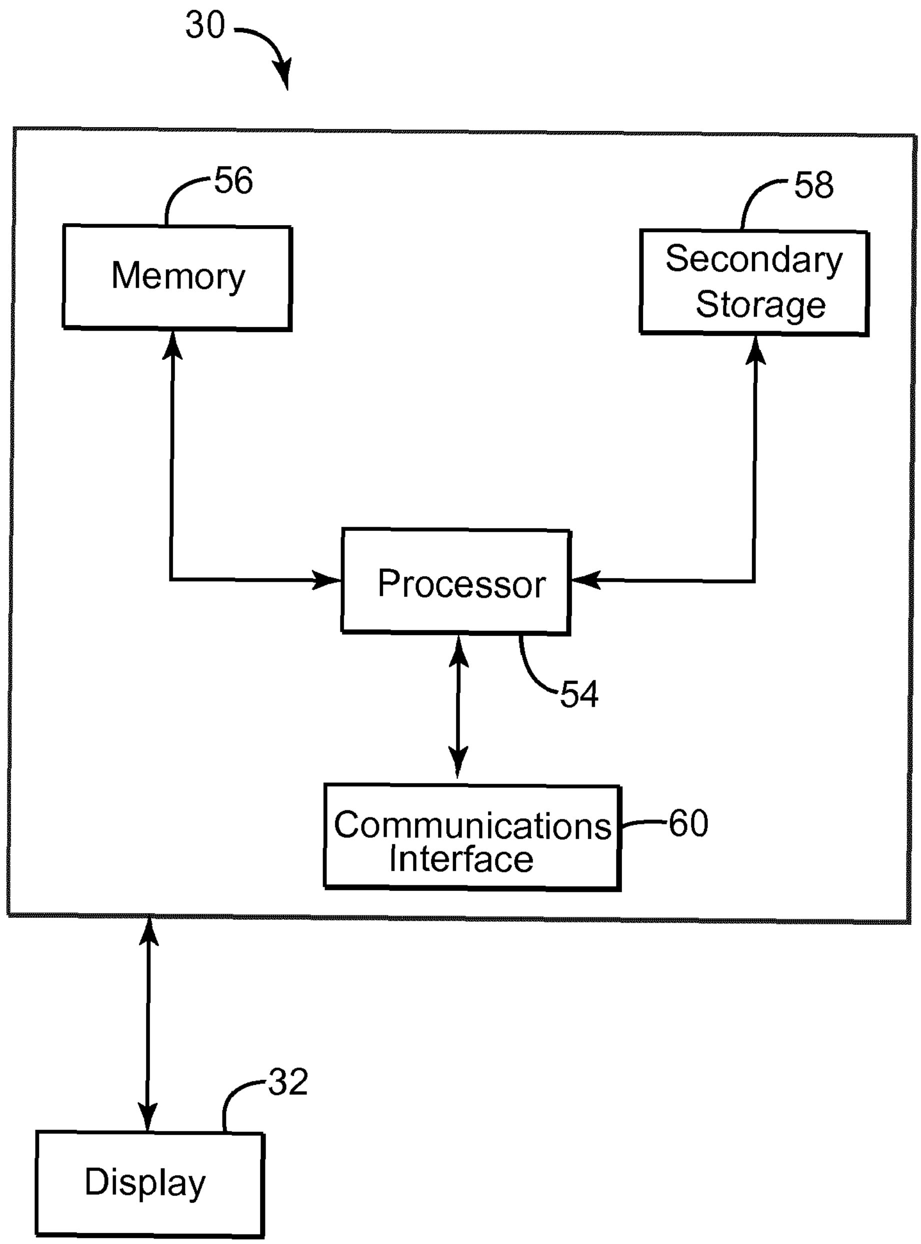
30
56
Memory
58
Secondary Storage
Processor
54
Communications Interface
60
32
Display

Figure 6

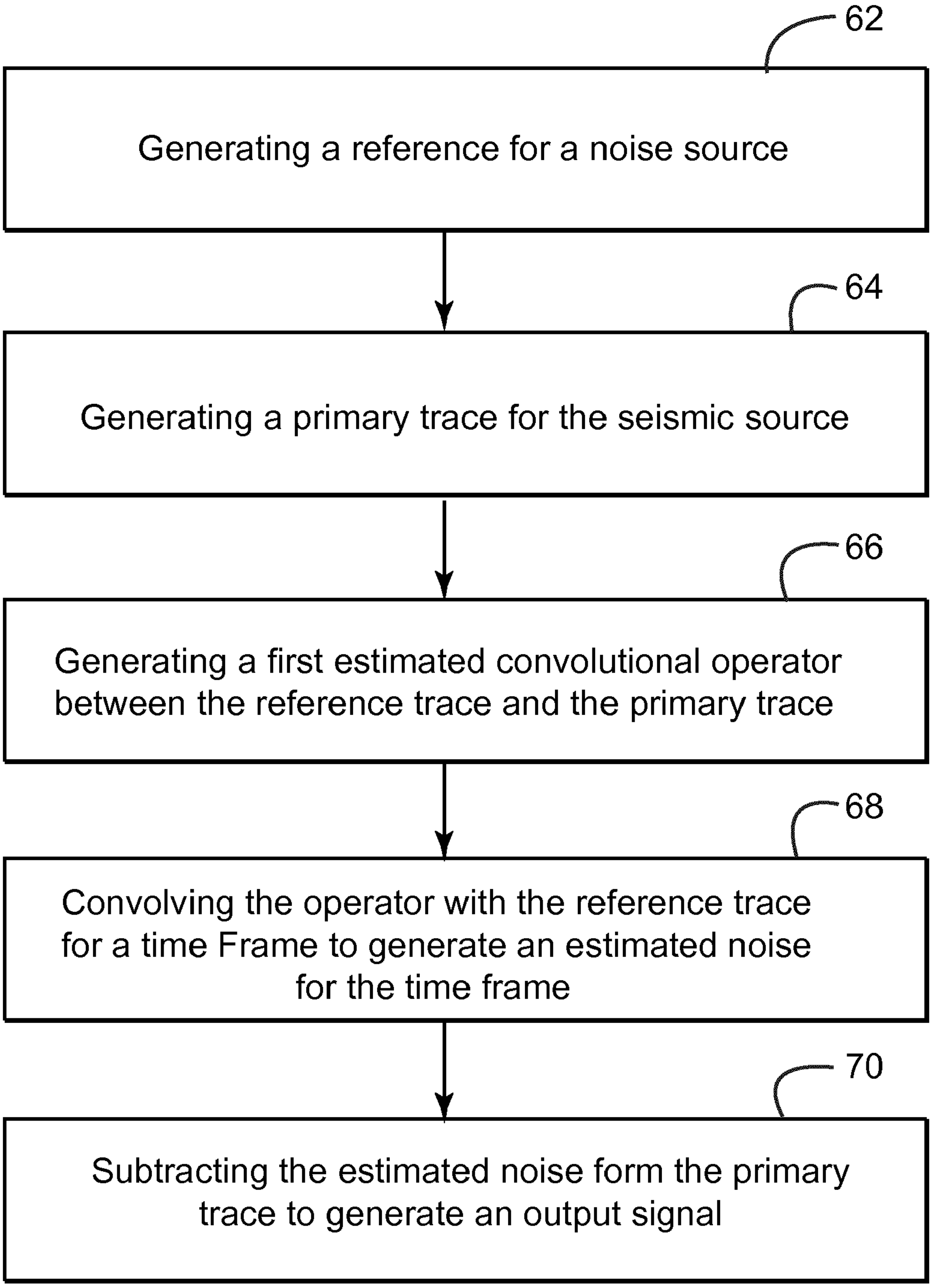
62
Generating a reference for a noise source
64
Generating a primary trace for the seismic source
66
Generating a first estimated convolutional operator between the reference trace and the primary trace
68
Convolving the operator with the reference trace for a time Frame to generate an estimated noise for the time frame
70
Subtracting the estimated noise form the primary trace to generate an output signal

Europäisches Patentamt
European Patent Office
Office européen des brevets

# EUROPEAN SEARCH REPORT

Application Number
EP 12 18 6431

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 051 963 A (LINVILLE JR ANDREW F [US] ET AL) 24 September 1991 (1991-09-24)<br>* column 1, line 6 - line 8 *<br>* column 2, line 5 - line 22 *<br>* column 2, line 61 - line 63 *<br>* column 3, line 5 - line 47 *<br>* column 4, line 23 - line 25 *<br>----- | 1-10 | INV.<br>G01V1/36<br>G01V1/28 |
| A | FR 2 888 946 A1 (WESTERNGECO SEISMIC HOLDINGS [VG])<br>26 January 2007 (2007-01-26)<br>* page 14, line 19 - line 30; claims 1,2 *<br>----- | 1-10 | |
| A | US 2004/133350 A1 (VENERUSO ANTHONY [US] ET AL) 8 July 2004 (2004-07-08)<br>* paragraph [0146] - paragraph [0150]; claim 1 *<br>----- | 1-10 | |

| TECHNICAL FIELDS SEARCHED (IPC) |
|---|
| G01V |

The present search report has been drawn up for all claims

1

| Place of search | Date of completion of the search | Examiner |
|---|---|---|
| Munich | 14 January 2013 | Schneiderbauer, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 18 6431

This annex lists the patent family members relating to the patent documents cited in the above-mentioned European search report. The members are as contained in the European Patent Office EDP file on
The European Patent Office is in no way liable for these particulars which are merely given for the purpose of information.

14-01-2013

| Patent document cited in search report | Publication date | Patent family member(s) | Publication date |
|---|---|---|---|
| US 5051963 A | 24-09-1991 | NONE | |
| FR 2888946 A1 | 26-01-2007 | FR 2888946 A1 | 26-01-2007 |
| | | GB 2428798 A | 07-02-2007 |
| | | US 2007030760 A1 | 08-02-2007 |
| | | US 2010014383 A1 | 21-01-2010 |
| US 2004133350 A1 | 08-07-2004 | AU 2003302714 A1 | 10-08-2004 |
| | | CA 2512828 A1 | 29-07-2004 |
| | | EP 1588278 A2 | 26-10-2005 |
| | | MX PA05007377 A | 07-04-2006 |
| | | US 2004133350 A1 | 08-07-2004 |
| | | WO 2004063835 A2 | 29-07-2004 |

EPO FORM P0459

For more details about this annex : see Official Journal of the European Patent Office, No. 12/82